Europäisches Patentamt

European Patent Office

Office européen des brevets

(19)

(11) Veröffentlichungsnummer: **0 547 378 B1**

(12) **EUROPÄISCHE PATENTSCHRIFT**

(45) Veröffentlichungstag der Patentschrift: **15.02.95**

(51) Int. Cl.6: **E01C 23/08**

(21) Anmeldenummer: **92119459.3**

(22) Anmeldetag: **13.11.92**

(54) **Ultraschall-Regeleinrichtung für ein fahrbares Fräsegerät.**

(30) Priorität: **15.11.91 DE 9114281 U**
**30.10.92 DE 9214770 U**

(43) Veröffentlichungstag der Anmeldung:
**23.06.93 Patentblatt 93/25**

(45) Bekanntmachung des Hinweises auf die
Patenterteilung:
**15.02.95 Patentblatt 95/07**

(84) Benannte Vertragsstaaten:
**DE FR GB IT NL**

(56) Entgegenhaltungen:
**DE-U- 8 810 670**
**US-A- 4 270 801**
**US-A- 4 961 173**

(73) Patentinhaber: **MOBA-Electronic Gesellschaft**
**für Mobil-Automation mbH**
**Vor den Eichen 4**
**D-65604 Elz (DE)**

(72) Erfinder: **Sehr, Willibald**
**Neustrasse 3a**
**W-6253 Hadamar/Steinbach (DE)**
Erfinder: **Zarniko, Martin**
**Pfaffengasse 1**
**W-6252 Diez (DE)**

(74) Vertreter: **Schoppe, Fritz, Dipl.-Ing.**
**Patentanwalt,**
**Georg-Kalb-Strasse 9**
**D-82049 Pullach (DE)**

## Beschreibung

Die vorliegende Erfindung betrifft ein fahrbares Fräsegerät mit einer Ultraschall-Regeleinrichtung. Insbesondere befaßt sich die vorliegende Erfindung mit einem verbesserten Regelsystem für die Ansteuerung der Fahrwerkshöhenverstellung von sogenannten Kaltfräsen oder Straßenfräsen.

Bei bekannten Straßenfräsen, die auch als Kaltfräsen bezeichnet werden, ist eine drehgelagerte Frästrommel bezüglich ihrer Drehachse gegenüber dem Chassis der Kaltfräse bzw. der Straßenfräse festgelegt. Die Kaltfräse verfügt über ein vorderes Fahrwerk und ein hinteres Fahrwerk. Das vordere Fahrwerk ist manuell auf einen festen Wert in seiner Höhe einstellbar. Das hintere Fahrwerk verfügt über eine Fahrwerkhöhenverstelleinrichtung, die in Abhängigkeit von einem Frästiefenregelsignal angesteuert wird. Das Frästiefenregelsignal wird von einem Sensor geliefert, der an der Kaltfräse angebracht ist und die Höhe des Sensors gegenüber einer Referenzebene erfaßt, welche beispielsweise ein Randstreifen des abzufräsenden Straßenbelages sein kann. Typischerweise wird ein derartiger Sensor durch einen sogenannten Tastski gebildet, der mechanisch über diese Referenzebene geführt wird, wobei ein die Höhenlage des Tastskis darstellendes Potentiometersignal als Frästiefenregelsignal verwendet werden kann, welches der Fahrwerkhöhenverstelleinrichtung zugeführt wird. Typischerweise ist der Sensor direkt neben der Frästrommel angeordnet. Da dies aufgrund bauart- oder applikationsbedingter Begrenzungen häufig nicht möglich ist, erfolgt die Abtastung häufig in Fahrtrichtung kurz vor der Frästrommel. Wenn nun das Fräsegerät in Form der Kaltfräse bzw. der Straßenfräse aufgrund der Nachregelung der Fahrwerkshöhe des hinteren Fahrwerkes in eine winkelmäßige Anstellage gegenüber der Horizontalen bzw. gegenüber der Referenzebene gebracht wird, so bewirkt der Versatz des Sensors gegenüber dem Angriffspunkt der Frästrommel in Fahrtrichtung nach vorne einen Geometriefehler, der die Tiefenregelung der Frästrommel mit einem Fehler arbeiten läßt.

Ein weiteres Problem bei bekannten Kaltfräsen bzw. Straßenfräsen liegt darin, daß die Referenzebene häufig von einer idealen ebenen Fläche abweicht. Typischerweise treten Welligkeiten im Verlauf der Referenzebene auf. Diese wellige Referenzebene wird in entsprechend welliger Form von dem Tastski abgetastet, so daß sich wiederum ein welliges Fräsbild ergibt.

Aus dem US-Patent 4,961,173 ist bereits eine Ultraschallregeleinrichtung für eine fahrbare Baumaschine bekannt, die mehrere, eng nebeneinander angeordnete Ultraschallsensoren umfaßt, mit denen ein Führungsseil beispielsweise für die Seitenführung und Höhenführung eines Straßenfertigers abgetastet werden kann.

Ausgehend von diesem Stand der Technik liegt der vorliegenden Erfindung die Aufgabe zugrunde, eine Ultraschall-Regeleinrichtung für ein fahrbares Fräsegerät zu schaffen, die eine genauere Einstellung der gewünschten Frästiefe ermöglicht.

Diese Aufgabe wird durch eine Ultraschall-Regeleinrichtung gemäß dem Kennzeichen des Patentanspruchs 1 gelöst.

Nachfolgend wird unter Bezugnahme auf die beiliegenden Zeichnungen eine bevorzugte Ausführungsform der erfindungsgemäßen Ultraschall-Regeleinrichtung näher erläutert. Es zeigen:

Fig. 1    eine schematische Seitenansicht einer Straßenfräse, die mit einer Ausführungsform der erfindungsgemäßen Ultraschall-Regeleinrichtung versehen ist; und

Fig. 2    ein Blockdiagramm der erfindungsgemäßen Ultraschall-Regeleinrichtung.

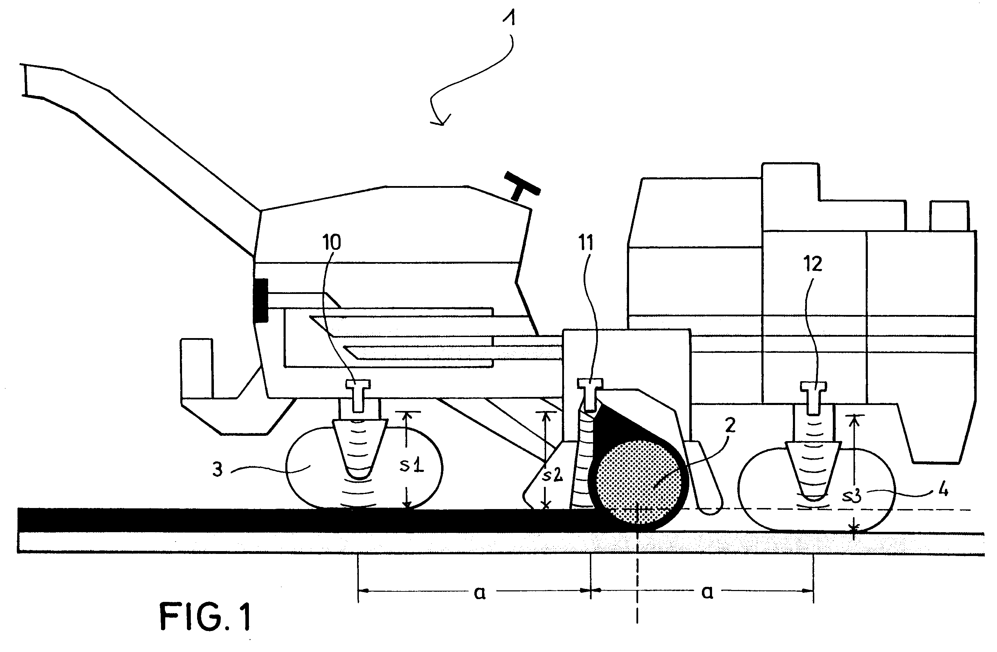

Wie in Fig. 1 gezeigt ist, hat die dort schematisch in Seitenansicht dargestellte Straßenfräse, die in ihrer Gesamtheit mit dem Bezugszeichen 1 bezeichnet ist, eine an ihr drehgelagerte Frästrommel 2 sowie ein vorderes und hinteres Fahrwerk 3, 4. Sowohl das vordere Fahrwerk 3 als auch das hintere Fahrwerk 4 sind an der Straßenfräse 1 mittels (nicht dargestellten) Fahrwerkhöhenverstelleinrichtungen befestigt. Für die Zwecke der automatischen Höhenverstellung des hinteren Fahrwerkes ist eine derartige Fahrwerkhöhenverstelleinrichtung, die typischerweise als elektrohydraulische Verstelleinrichtung ausgeführt ist, an sich bekannt. Eine solche, an sich bekannte Fahrwerkhöhenverstelleinrichtung kann beim Gegenstand der Erfindung auch für das vordere Fahrwerk 3 verwendet werden, so daß auf eine detaillierte Beschreibung der Ausführung der Fahrwerkhöhenverstelleinrichtungen verzichtet werden kann.

Erfindungsgemäß umfaßt die Ultraschall-Regeleinrichtung zumindest drei Ultraschallsensoren 10, 11, 12, die im wesentlichen in Bewegungsrichtung der Straßenfräse 1 hintereinander derart angeordnet sind, daß mit ihren Schallkeulen eine Referenzebene abgetastet werden kann. Typischerweise ist die abzutastende Referenzebene ein Seitenstreifen einer Straße, deren Straßenbelag in einer vorbestimmten Tiefe abzufräsen ist. In jedem Fall sind die Ultraschallsensoren 10, 11, 12 derart weit voneinander beabstandet, daß sich ihre Schallkeulen am Ort der abzutastenden Referenzfläche nicht überschneiden.

Bei einer bevorzugten Ausführungsform der Erfindung, wie sie in Fig. 1 dargestellt ist, umfaßt die Ultraschall-Regeleinrichtung nur die drei gezeigten Ultraschallsensoren 10, 11, 12, welche bei diesem Ausführungsbeispiel mit gleichen gegenseitigen Abständen a in jeweils übereinstimmender Höhe an der Straßenfräse 1 angebracht sind. Die Vorteile dieser Art der Anordnung der Ultraschallsensoren werden aus der nachfolgenden Beschreibung der Signalverarbeitung für den Fachmann deutlich.

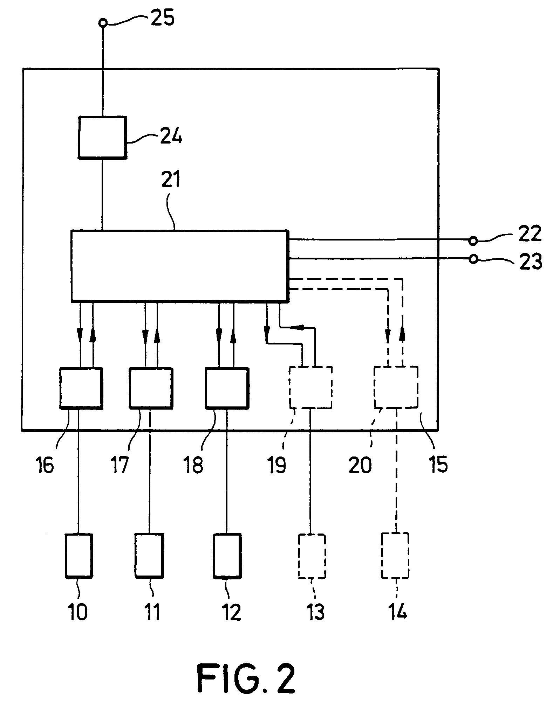

Das Blockdiagramm der Ultraschall-Regeleinrichtung ist in Fig. 2 dargestellt. Die Ultraschallsensoren 10, 11, 12 sowie gegebenenfalls weitere Ultraschallsensoren 13, 14 sind über entsprechende Sende-Empfangsschaltungen 16, 17, 18 sowie gegebenenfalls 19, 20 mit einer Rechnereinheit 21 verbunden, die zusammen mit den Sende-Empfangs-Schaltungen eine Auswertungseinrichtung 15 bildet. Die Rechnereinheit 21 stellt an Ausgängen 22, 23 Ansteuersignale für die Fahrwerkhöhenverstelleinrichtungen zur Höhenverstellung der Fahrwerke 3, 4 zur Verfügung.

Ein Analog-Digital-Wandler 24 liegt zwischen dem Eingang 25 für ein Sollfrästiefensignal und der Rechnereinheit 21.

Die Rechnereinheit bewirkt eine zyklische Ansteuerung der Ultraschallsensoren 10 bis 12 (sowie gegebenenfalls 13, 14) zur sequenziellen Abgabe von Ultraschallpulsen, wobei die Laufzeit ab der jeweiligen Abgabe eines Ultraschallpulses bis zum Empfangen des an der Referenzebene reflektierten Echos durch den gleichen Ultraschallsensor, der den Puls abgab, gemessen wird. Aus dieser Laufzeit ermittelt die Rechnereinheit 21 die Abstände s1, s2, s3 eines jeden Ultraschallsensors 10, 11, 12 gegenüber der Referenzfläche. Nunmehr überprüft die Auswertungseinrichtung, ob jeder der gemessenen Abstände als gültige Messung anerkannt werden kann oder als Fehlmessung verworfen werden muß. Ein Abstand wird als Fehlmessung verworfen, wenn der betreffende Meßpunkt um mehr als eine vorbestimmte Entfernung außerhalb derjenigen Ebene liegt, die durch den übrigen Abständen zugeordneten Meßpunkte festgelegt ist.

Bei dem bevorzugten Ausführungsbeispiel, bei dem drei in gleichen gegenseitigen Abständen mit übereinstimmender Höhe an der Straßenfräse 1 angeordnete Ultraschallsensoren 10, 11, 12 vorgesehen sind, kann die Erfassung von Fehlmessungen durch einfache Differenzbildung erfolgen. In diesem Fall bildet die Rechnereinheit 21 die Differenzen d12, d13, d23 von jeweils zwei Abständen s1 und s2 bzw. s1 und s3 bzw. s2 und s3. Diejenigen Abstände werden als gültig eingestuft, deren Differenzbetrag kleiner als ein bestimmter Grenzwert ist, der die zulässige Welligkeit der Referenzebene darstellt. Wenn beispielsweise einer der drei Sensoren ein auf der Referenzebene liegendes Hindernis z. B. in Form eines Steines erfaßt, so ist der betreffende Abstand (der anzunehmenderweise der Abstand s3 sei) um die Höhe dieses Hindernisses geringer als die anderen beiden Abstände s1, s2. In diesem Beispielsfall ist die Differenz d12 im wesentlichen Null und damit kleiner als ein vorgegebener Grenzwert, während die Differenzen d13 bzw. d23 den Grenzwert übersteigen. Damit verwirft die Auswertungseinrichtung den dritten Abstand s3 als Fehlmessung. Sodann wird der mittlere Abstand dm als Mittelwert der als gültig eingestuften Abstände gemäß folgendem Zusammenhang berechnet:

$$dm = (s1 + s2) / 2$$

Sobald das Hindernis nicht mehr im Erfassungsbereich des dritten Ultraschallsensors 12 ist, sind alle Differenzbeträge d12, d13, d23 kleiner als der Grenzwert. Nunmehr verwirft die Auswertungseinrichtung keinen der Abstände als Fehlmessung. Daher wird der mittlere Abstand gemäß folgender Formel berechnet:

$$dm = (s1 + s2 + s3) / 3$$

Die Auswerteeinheit bildet aus der Sollwertvorgabe bzw. Sollfrästiefe, dem mittleren Abstand dm zur Referenzebene und der relativen Neigung der Fräsemaschine (in Fahrtrichtung) zur Referenzebene die Ansteuersignale für die Höhenverstellung sowohl für die vordere als auch die hintere Fahrwerkshöhenverstelleinrichtung so, daß die Höhe und die Parallelität der Fräsemaschine ausgeregelt werden.

Die erfindungsgemäße Ultraschall-Regeleinrichtung für ein fahrbares Fräsegerät vermeidet Frästiefenfehler durch eine unerwünschte Winkelanstellung des fahrbaren Fräsegerätes gegenüber der Referenzebene, kompensiert weitgehend Welligkeiten der Referenzebene und erleichtert die Tätigkeit der Bedienungsperson der Straßenfräse dadurch, daß die Straßenfräse in einer parallelen Lage gehalten wird. Hindernisse auf der Referenzebene werden durch die erfindungsgemäße Ultraschall-Regeleinrichtung durch Erfassung entsprechender Fehlmessungen erkannt, so daß sie die Genauigkeit der Frästiefeneinstellung nicht beeinträchtigen.

**Patentansprüche**

1. Fahrbares Fräsegerät mit einer Ultraschall-Regeleinrichtung mit einer an dem Fräsegerät (1) drehgelagerten Frästrommel (2), einem vorderen und einem hinteren Fahrwerk (3, 4), von denen eines (4) eine erste Fahrwerkhöhenverstelleinrichtung aufweist, die in Abhängigkeit von einem Frästiefenregelsignal angesteuert wird,
dadurch gekennzeichnet,
daß das andere Fahrwerk (3) eine zweite Fahrwerkhöhenverstelleinrichtung aufweist,
daß mindestens drei Ultraschallsensoren (10, 11, 12) im wesentlichen in Bewegungsrichtung des Fräsegerätes (1) hintereinander an dem Fräsegerät (1) angeordnet sind,

daß eine Auswertungseinrichtung (15) aufgrund von Ultraschallsensorsignalen der Ultraschallsensoren (10, 11, 12) die Abstände (s1, s2, s3) der Ultraschallsensoren (10, 11, 12) gegenüber einer Referenzfläche erfaßt,

daß die Auswertungseinrichtung (15) aus den gemessenen Abständen (s1, s2, s3) einerseits ein Neigungssignal, das den Anstellwinkel des Fräsegerätes (1) gegenüber der Referenzfläche darstellt, und andererseits ein gemitteltes Abstandssignal (dm) ableitet, und

daß die Auswertungseinrichtung (15) aus dem gemittelten Abstandssignal (dm), dem Neigungswinkel und einer einstellbaren Sollfrästiefe Ansteuersignale für die beiden Fahrwerkhöhenverstelleinrichtungen ableitet.

2. Fahrbares Fräsegerät nach Anspruch 1, dadurch gekennzeichnet,
daß beide Fahrwerkhöhenverstelleinrichtungen zur Nachregelung der Frästiefe mit gleichsinnigen Ansteuersignalen, die von dem gemittelten Abstandssignal (dm) abhängen, beaufschlagt werden.

3. Fahrbares Fräsegerät nach Anspruch 1 oder 2, dadurch gekennzeichnet,
daß beide Fahrwerkhöhenverstelleinrichtungen zur Nachregelung der Anstellung des Fräsegerätes (1) gegenüber der Referenzfläche mit gegensinnigen, von dem Neigungssignal abgeleiteten Ansteuersignalen beaufschlagt werden.

4. Fahrbares Fräsegerät nach einem der Ansprüche 1 bis 3, dadurch gekennzeichnet,
daß die Auswertungseinrichtung (15) einen der gemessenen Abstände (s1, s2, s3) als Fehlmessung verwirft, wenn der betreffende Meßpunkt um mehr als eine vorbestimmte Entfernung außerhalb derjenigen Ebene liegt, die durch die den übrigen Abständen zugeordneten Meßpunkte festgelegt ist, und
daß die Auswertungseinrichtung (15) das gemittelte Abstandssignal nur aus denjenigen Abständen (s1, s2, s3) durch Mittelung berechnet, die nicht als Fehlmessung verworfen worden sind.

5. Fahrbares Fräsegerät nach einem der Ansprüche 1 bis 4, dadurch gekennzeichnet,
daß die Ultraschallsensoren (10, 11, 12) in jeweils bekannter Höhe mit bekannten gegenseitigen Abständen (a) an dem Fräsegerät (1) angeordnet sind,
daß die Auswertungseinrichtung (15) die Differenzen (d12, d13, d23) von jeweils zwei Abständen (s1, s2; s1, s3; s2, s3), ermittelt,
daß die Auswertungseinrichtung (15) die Abstände (s1, s2) als gültig einstuft, deren Differenzbetrag (d12) kleiner als ein Grenzwert ist, und
daß die Auswertungseinrichtung (15) den mittleren Abstand (dm) als Mittelwert der als gültig eingestuften Abstände (s1, s2) berechnet.

**Claims**

1. A travelling cutter comprising an ultrasonic control unit, a cutter drum (2), which is supported such that it is rotatable relative to said cutter (1), and front and rear travelling gears (3, 4), one (4) of said travelling gears being provided with a first travelling gear height adjustment means controlled in dependence upon a cutting depth control signal,
characterized in
that the other travelling gear (3) is provided with a second travelling gear height adjustment means,
that at least three ultrasonic sensors (10, 11, 12) are arranged on the cutter (1) one behind the other essentially in the direction of motion of said cutter (1),
that an evaluation means (15) detects the distances (s1, s2, s3) between the ultrasonic sensors (10, 11, 12) and a reference surface on the basis of ultrasonic sensor signals of said ultrasonic sensors (10, 11, 12),
that the evaluation means (15) derives from said measured distances (s1, s2, s3), on the one hand, an inclination signal representing the angle of inclination of the cutter (1) relative to the reference surface and, on the other hand, an averaged distance signal (dm), and
that the evaluation means (15) derives control signals for the two travelling gear height adjustment means from said averaged distance signal (dm), from the inclination angle, and from a nominal cutting depth which can be adjusted.

2. A travelling cutter according to claim 1, characterized in
that, for readjusting the cutting depth, both travelling gear height adjustment means are acted upon by codirectional control signals, which depend on said averaged distance signal (dm).

3. A travelling cutter according to one of the claims 1 to 2, characterized in
that, for readjusting the angle of inclination of the cutter (1) relative to the reference surface, both travelling gear height adjustment means are acted upon by contradirectional control signals, which are derived from the inclination signal.

4. A travelling cutter according to one of the claims 1 to 3, characterized in

that the evaluation means (15) will reject one of the measured distances (s1, s2, s3) as faulty measurement, if the measuring point in question lies more than a predetermined distance outside of the plane which is determined by the measuring points associated with the other distances, and

that the evaluation means (15) will calculate the averaged distance signal by averaging only on the basis of the distances (s1, s2, s3) which have not been rejected as faulty measurements.

5. A travelling cutter according to one of the claims 1 to 4, characterized in

that the ultrasonic sensors (10, 11, 12) are attached to the cutter (1) on a respective known level and at known distances (a) from one another,

that the evaluation means (15) determines the differences (d12, d13, d23) between two distances (s1, s2; s1, s3; s2, s3) in each case,

that the evaluation means (15) classifies the distances (s1, s2) whose difference (d12) is smaller than a limit value as valid distances, and

that the evaluation means (15) calculates the average distance (dm) as an average value of the distances (s1, s2) classified as valid distances.

**Revendications**

1. Fraise mobile avec un appareil de contrôle ultrasonore, avec un tambour de fraisage (2) monté de manière rotative sur la fraise (1), un train de roues avant et un train de roues arrière (3, 4), dont l'un (4) présente un dispositif de réglage en hauteur de train de roues qui est commandé en fonction d'un signal de réglage de profondeur de fraisage, caractérisée en ce

que l'autre train de roues (3) présente un second dispositif de réglage de hauteur de train de roues,

qu'au moins trois capteurs ultrasonores (10, 11, 12) sont disposés l'un derrière l'autre sur la fraise (1), sensiblement dans le sens de déplacement de la fraise (1),

qu'un dispositif d'évaluation (15) saisit, sur base de signaux de capteur ultrasonore des capteurs ultrasonores (10, 11, 12), les distances (s1, s2, s3) des capteurs ultrasonores (10, 11, 12) par rapport à une surface de référence,

que le dispositif d'évaluation (15) dérive, des distances mesurées (s1, s2, s3), d'une part, un signal d'inclinaison qui représente l'angle d'attaque de la fraise (1) par rapport à la surface de référence, et, d'autre part, un signal de distance moyenne (dm), et

que le dispositif d'évaluation (15) dérive, du signal de distance moyenne (dm), de l'angle d'inclinaison et d'une profondeur de fraisage de consigne réglable, des signaux de commande pour les deux dispositifs de réglage de hauteur de train de roues.

2. Fraise mobile suivant la revendication 1, caractérisée en ce que les deux dispositifs de réglage en hauteur de train de roues sont, pour le réglage fin de la profondeur de fraisage, soumis à l'admission de signaux de commande dans le même sens qui dépendent du signal de distance moyenne (dm).

3. Fraise mobile suivant la revendication 1 ou 2, caractérisée en ce que les deux dispositifs de réglage en hauteur de train de roues sont soumis, pour le réglage fin de l'attaque de la fraise (1) par rapport à la surface de référence, à l'admission de signaux de commande dans le même sens dérivés du signal d'inclinaison.

4. Fraise mobile suivant l'une des revendications 1 à 3, caractérisée en ce que le dispositif d'évaluation (15) rejette comme mesure erronée l'une des distances mesurées (s1, s2, s3) lorsque le point de mesure concerné se situe de plus d'une distance prédéterminée en-dehors du plan qui est fixé par les points de mesure associés aux autres distances, et

que le dispositif d'évaluation (15) ne calcule le signal de distance moyenne, par établissement de la moyenne, qu'à partir des distances (s1, s2, s3) qui ne sont pas rejetées comme mesure erronée.

5. Fraise mobile suivant l'une des revendications 1 à 4, caractérisée en ce

que les capteurs ultrasonores (10, 11, 12) sont disposés, chacun, sur la fraise (1) à une hauteur connue, à des distances connues (a) entre eux,

que le dispositif d'évaluation (15) détermine les différences (d12, d13, d23) de chaque fois deux distances (s1, s2; s1, s3; s2, s3),

que le dispositif d'évaluation (15) considère valables les distances (s1, s2) dont la valeur de différence (d12) est inférieure à une valeur limite, et

que le dispositif d'évaluation (15) calcule comme distance moyenne (dm) la valeur moyenne des distances considerées valables (s1, s2).

FIG.1

FIG. 2